# FASCICULE DE BREVET EUROPEEN

(11) **EP 1 606 795 B1**
(45) Date de publication et mention de la délivrance du brevet: **26.08.2009**
(21) Numéro de dépôt: 04718324.9
(22) Date de dépôt: 08.03.2004
(51) Int. Cl.: G10L 15/28

(54) **SYSTEME DE RECONNAISSANCE DE PAROLE DISTRIBUEE**
VERTEILTES SPRACHERKENNUNGSVERFAHREN
DISTRIBUTED SPEECH RECOGNITION SYSTEM

(30) Priorité: 25.03.2003 FR 0303615
(43) Date de publication de la demande: 21.12.2005
(73) Titulaire: FRANCE TELECOM, 75015 Paris (FR)
(72) Inventeur: MONNE, Jean, F-22700 Perros Guirec (FR); PETIT, Jean-Pierre, F-22220 Minihy Treguier (FR); BRISARD, Patrick, F-92320 Chatillon (FR)
(74) Mandataire: Loisel, Bertrand
(86) Numéro de dépôt international: PCT/FR2004/000546
(87) Numéro de publication internationale: WO 2004/088636

(56) Documents cités:
- EP-A- 1 006 509
- WO-A-01/95312
- US-A- 6 122 613
- US-B1- 6 308 158
- US-B1- 6 487 534
- WEIQI ZHANG ET AL: "The study on distributed speech recognition system" 2000 IEEE INTERNATIONAL CONFERENCE ON ACOUSTICS, SPEECH, AND SIGNAL PROCESSING. PROCEEDINGS. (ICASSP). ISTANBUL, TURKEY, JUNE 5-9, 2000, IEEE INTERNATIONAL CONFERENCE ON ACOUSTICS, SPEECH, AND SIGNAL PROCESSING (ICASSP), NEW YORK, NY: IEEE, US, vol. 3 OF 6, 5 juin 2000 (2000-06-05), pages 1431-1434, XP002233412 ISBN: 0-7803-6294-2

## Description

La présente invention est relative au domaine de la commande vocale d'applications, exercée sur des terminaux utilisateurs, grâce à la mise en oeuvre de moyens de reconnaissance de la parole. Les terminaux utilisateurs considérés sont tous les dispositifs dotés d'un moyen de capture de la parole, communément un microphone, possédant des capacités de traitement de ce son et reliés à un ou des serveurs par un canal de transmission. II s'agit par exemple d'appareils de commande, de télécommande utilisés dans des applications domotiques, dans des automobiles (commande d'auto-radio ou d'autres fonctions du véhicule), dans des PC ou des postes téléphoniques. Le champ des applications concernées est essentiellement celui où l'utilisateur commande une action, demande une information ou veut interagir à distance en utilisant une commande vocale. L'utilisation de commandes vocales n'exclut pas l'existence dans le terminal utilisateur d'autres moyens d'action (système multi-modal), et le retour d'informations, d'états ou de réponses peut également se faire sous forme combinée visuelle, sonore, olfactive et tout autre moyen humainement perceptif.

De manière générale, les moyens pour la réalisation de la reconnaissance de parole comprennent des moyens d'obtention d'un signal audio, des moyens d'analyse acoustique qui extraient des paramètres de modélisation et enfin des moyens de reconnaissance qui comparent ces paramètres de modélisation calculés à des modèles, et proposent la forme mémorisée dans les modèles qui peut être associée au signal de la façon la plus probable. Optionnellement des moyens de détection d'activité vocale VAD (" Voice Activation Detection ") peuvent être utilisés. Ils assurent la détection des séquences correspondant à de la parole et devant être reconnues. Ils extraient du signal audio en entrée, en-dehors des périodes d'inactivité vocale, des segments de parole, qui seront ensuite traités par les moyens de calcul des paramètres de modélisation.

Plus particulièrement, l'invention porte sur les interactions entre les trois modes de reconnaissance de la parole dits embarqué, centralisé et distribué.

Dans un mode de reconnaissance de parole embarquée, l'ensemble des moyens pour effectuer la reconnaissance de parole se trouvent au niveau du terminal utilisateur. Les limitations de ce mode de reconnaissance sont donc liées notamment à la puissance des processeurs embarqués, et à la mémoire disponible pour stocker les modèles de reconnaissance de parole. En contrepartie, ce mode autorise un fonctionnement autonome, sans connexion à un serveur, et à ce titre est voué à un fort développement lié à la réduction du coût de la capacité de traitement.

Dans un mode de reconnaissance de la parole centralisée, toute la procédure de reconnaissance de.parole et les modèles de reconnaissance se trouvent et s'exécutent sur une machine, appelée généralement serveur vocal, accessible par le terminal utilisateur. Le terminal transmet simplement au serveur un signal de parole. Cette méthode est utilisée notamment dans les applications offertes par les opérateurs de télécommunication. Un terminal basique peut ainsi accéder à des services évolués, activés à la voix. De nombreux types de reconnaissance de parole (robuste, flexible, très grand vocabulaire, vocabulaire dynamique, parole continue, mono ou multi locuteurs, plusieurs langues, etc) peuvent être implémentés dans un serveur de reconnaissance de parole. En effet, les machines centralisées ont des capacités de stockage de modèles, des tailles de mémoire de travail et des puissances de calcul importantes et croissantes.

Dans un mode de reconnaissance de parole distribuée, les moyens d'analyse acoustique sont embarqués dans le terminal utilisateur, les moyens de reconnaissance étant au niveau du serveur. Dans ce mode distribué, une fonction de débruitage associée aux moyens de calcul des paramètres de modélisation peut être avantageusement réalisée à la source. Seuls les paramètres de modélisation sont transmis, ce qui permet un gain substantiel en débit de transmission, particulièrement intéressant pour les applications multimodales. De plus, le signal à reconnaître peut être mieux protégé contre les erreurs de transmission. Optionnellement on peut aussi embarquer la détection d'activité vocale (VAD) pour ne transmettre les paramètres de modélisation que durant les séquences de parole, ce qui a pour avantage de réduire de manière importante la durée de transmission active. La reconnaissance de parole distribuée permet en outre de véhiculer sur le même canal de transmission des signaux de parole et de données, notamment texte, images ou vidéos. Le réseau de transmission peut être par exemple de type IP, GPRS, WLAN ou Ethernet. Ce mode permet également de bénéficier de procédures de protection et de correction contre les pertes de paquets constituant le signal transmis à destination du serveur. Cependant il nécessite la disponibilité de canaux de transmission de données, avec un protocole strict de transmission.

L'invention propose un système de reconnaissance de parole comportant des terminaux utilisateurs et des serveurs combinant les différentes fonctions offertes par les modes de reconnaissance de parole embarquée, centralisée et distribuée, pour offrir le maximum d'efficacité, de confort et d'ergonomie aux utilisateurs de services multi modaux où la commande vocale est utilisée.

Le brevet US 6 487 534-B1 décrit un système de reconnaissance de parole distribuée comportant un terminal utilisateur disposant des moyens de détection d'activité vocale, de moyens de calcul des paramètres de modélisation et de moyens de reconnaissance. Ce système comprend en outre un serveur disposant également de moyens de reconnaissance. Le principe décrit est de réaliser au moins une première phase de reconnaissance au niveau du terminal utilisateur. Dans une deuxième phase optionnelle, les paramètres de modélisation calculés au niveau du terminal sont envoyés à destination du serveur, afin notamment de déterminer cette fois grâce aux moyens de reconnaissance du serveur, une forme mémorisée dans les modèles de celui-ci et associée au signal envoyé.

Le but visé par le système décrit dans le document cité est de diminuer la charge au niveau du serveur. Cependant il s'ensuit que le terminal doit réaliser le calcul des paramètres de modélisation en local avant de les transmettre éventuellement à destination du serveur. Or il y a des circonstances où, pour des raisons de gestion de charge ou pour des raisons applicatives, il est préférable de réaliser ce calcul au niveau du serveur.

Il s'ensuit également que les canaux utilisés pour la transmission des paramètres de modélisation à reconnaître, dans un système selon le document cité ci-dessus, doivent être impérativement des canaux aptes à transmettre ce type de données. Or lorsque de tels canaux au protocole très strict ne sont pas forcément disponibles en permanence sur le réseau de transmission. C'est pourquoi il est intéressant de pouvoir utiliser des canaux classiques de transmission de signaux audio, pour ne pas retarder ou bloquer le processus de reconnaissance entamé au niveau du terminal.

Un but de la présente invention, telle que définie par les revendications 1, 7 et 11, est de proposer un système distribué qui soit moins affecté par les limitations citées ci-dessus.

Ainsi suivant un premier aspect, l'invention propose un système de reconnaissance de parole distribuée, comportant au moins un terminal utilisateur et au moins un serveur aptes à communiquer entre eux par l'intermédiaire d'un réseau de télécommunications, dans lequel le terminal utilisateur comprend :
- des moyens d'obtention d'un signal audio à reconnaître ;
- des premiers moyens de calcul de paramètres de modélisation du signal audio; et
- des premiers moyens de contrôle pour sélectionner au moins un signal à émettre à destination du serveur parmi le signal audio à reconnaître et un signal indiquant les paramètres de modélisation calculés,
et dans lequel le serveur comprend :
- des moyens de réception du signal sélectionné en provenance du terminal utilisateur ;
- des seconds moyens de calcul de paramètres de modélisation d'un signal d'entrée ;
- des moyens de reconnaissance pour associer au moins une forme mémorisée à des paramètres d'entrée ; et
- des seconds moyens de contrôle pour commander les seconds moyens de calcul et les moyens de reconnaissance de façon à
   - lorsque le signal sélectionné reçu par les moyens de réception est de type audio, activer les seconds moyens de calcul de paramètres en leur adressant le signal sélectionné en tant que signal d'entrée, et adresser les paramètres calculés par les seconds moyens de calcul aux moyens de reconnaissance en tant que paramètres d'entrée, et
   - lorsque le signal sélectionné reçu par les moyens de réception indique des paramètres de modélisation, adresser lesdits paramètres indiqués aux moyens de reconnaissance en tant que paramètres d'entrée.

Ainsi le système selon l'invention permet de transmettre depuis le terminal utilisateur à destination du serveur soit le signal audio (compressé ou non), soit le signal délivré par les moyens de calcul des paramètres de modélisation du terminal. Le choix du signal transmis peut être défini soit par le type d'applications en cours, soit par l'état du réseau, soit suite à une coordination entre les moyens de contrôle respectifs du terminal et du serveur

Un système selon l'invention donne la capacité au terminal utilisateur de réaliser, en fonction par exemple de paramètres d'entrée dont les moyens de contrôle disposent à un instant donné, le calcul des paramètres de modélisation au niveau du terminal ou au niveau du serveur. Ce calcul peut également être réalisé en parallèle au niveau du terminal et au niveau du serveur.

Un système selon l'invention permet d'effectuer la reconnaissance vocale depuis des terminaux de différents types coexistant au sein d'un même réseau, par exemple :
- des terminaux ne disposant d'aucun moyen de reconnaissance local (ou dont le moyen de reconnaissance local est inactif), auquel cas le signal audio est envoyé pour reconnaissance à destination du serveur ;
- des terminaux disposant de moyens de détection d'activité vocale sans moyens de calcul de paramètres de modélisation, ni moyens de reconnaissance (ou dont les moyens de calcul de paramètres et les moyens de reconnaissance sont inactifs), et transmettant au serveur pour reconnaissance un signal audio d'origine ou un signal audio représentatif de segments de parole extraits du signal audio en-dehors des périodes d'inactivité vocale,
- et des serveurs disposant par exemple uniquement de moyens de reconnaissance, sans moyens de calcul de paramètres de modélisation.

Avantageusement, les moyens d'obtention du signal audio du terminal utilisateur peuvent comprendre en outre des moyens de détection d'activité vocale pour extraire du signal audio d'origine, en-dehors des périodes d'inactivité vocale, des segments de parole. Les moyens de contrôle du terminal sélectionnent alors au moins un signal à émettre à destination du serveur, parmi un signal audio représentatif des segments de parole et le signal indiquant les paramètres de modélisation calculés.

Avantageusement les moyens de contrôle du terminal sont adaptés pour sélectionner au moins un signal à émettre à destination du serveur parmi au moins le signal audio d'origine, le signal audio indiquant les segments de parole extraits du signal audio d'origine et le signal indiquant des paramètres de modélisation calculés. Au niveau du serveur, les moyens de contrôle sont adaptés pour commander les moyens de calcul et les moyens de reconnaissance de façon à, lorsque le signal sélectionné reçu par les moyens de réception est représentatif des segments de parole extraits par les moyens de détection d'activité vocale du terminal, activer les moyens de calcul de paramètres du serveur en leur adressant le signal sélectionné en tant que signal d'entrée, et adresser les paramètres calculés par ces moyens de calcul aux moyens de reconnaissance en tant que paramètres d'entrée.

Dans un mode de réalisation préféré, le serveur comporte en outre des moyens de détection d'activité vocale pour extraire d'un signal reçu de type audio, en-dehors des périodes d'inactivité vocale, des segments de parole. Dans ce cas, au niveau du serveur, les moyens de contrôle sont adaptés pour commander les moyens de calcul et les moyens de reconnaissance de façon à
- lorsque le signal sélectionné reçu par les moyens de réception est de type audio :
   - si le signal reçu de type audio est représentatif de segments de parole après détection d'activité vocale, activer les seconds moyens de calcul de paramètres en leur adressant le signal sélectionné en tant que signal d'entrée, puis adresser les paramètres calculés par les seconds moyens de calcul de paramètres aux moyens de reconnaissance en tant que paramètres d'entrée ;
   - sinon activer les moyens de détection d'activité vocale du serveur en leur adressant le signal sélectionné en tant que signal d'entrée, puis adresser les segments extraits par les moyens de détection d'activité vocale aux seconds moyens de calcul de paramètres en tant que paramètres d'entrée, puis adresser les paramètres calculés par les seconds moyens de calcul de paramètres aux moyens de reconnaissance en tant que paramètres d'entrée ;
- lorsque le signal sélectionné reçu par les moyens de réception indique des paramètres de modélisation, adresser lesdits paramètres indiqués aux moyens de reconnaissance en tant que paramètres d'entrée.

Avantageusement, le terminal utilisateur comprend en outre des moyens de reconnaissance pour associer au moins une forme mémorisée à des paramètres d'entrée.

Dans ce dernier cas, les moyens de contrôle du terminal peuvent être adaptés pour sélectionner un signal à émettre à destination du serveur en fonction du résultat fourni par les moyens de reconnaissance du terminal. Et le terminal utilisateur peut comporter en outre des moyens de stockage adaptés pour stocker un signal au niveau du terminal, pour pouvoir, au cas où le résultat de la reconnaissance locale au terminal n'est pas satisfaisante, envoyer le signal pour reconnaissance par le serveur.

Avantageusement, les moyens de contrôle du terminal peuvent être adaptés pour sélectionner un signal à émettre à destination du serveur indépendamment du résultat fourni par des premiers moyens de reconnaissance.

Il faut noter que les moyens de contrôle d'un terminal peuvent passer de l'un à l'autre des deux modes décrits dans les deux paragraphes ci-dessus, en fonction par exemple du contexte applicatif, ou de l'état du réseau.

De préférence, les moyens de contrôle du serveur coopèrent avec les moyens de contrôle du terminal. Le terminal peut ainsi éviter d'envoyer à destination du serveur par exemple un signal audio s'il y a déjà une charge importante au niveau des moyens de calcul de paramètres du serveur. Dans un mode possible de réalisation, les moyens de contrôle du serveur sont configurés pour coopérer avec les moyens du terminal pour adapter le type de signaux envoyés par le terminal en fonction des capacités respectives du réseau, du serveur et du terminal.

Les moyens de calcul et de reconnaissance du terminal peuvent être normalisés ou propriétaires.

Dans un mode de réalisation préféré, certains au moins parmi les moyens de reconnaissance et de calcul de paramètres au niveau du terminal lui ont été fournis par téléchargement, sous forme de code exécutable par le processeur du terminal, par exemple depuis le serveur.

Selon un deuxième aspect, l'invention propose un terminal utilisateur pour mettre en oeuvre un système de reconnaissance de parole distribuée selon l'invention.

Selon un troisième aspect, l'invention propose un serveur pour mettre en oeuvre un système de reconnaissance de parole distribuée selon l'invention.

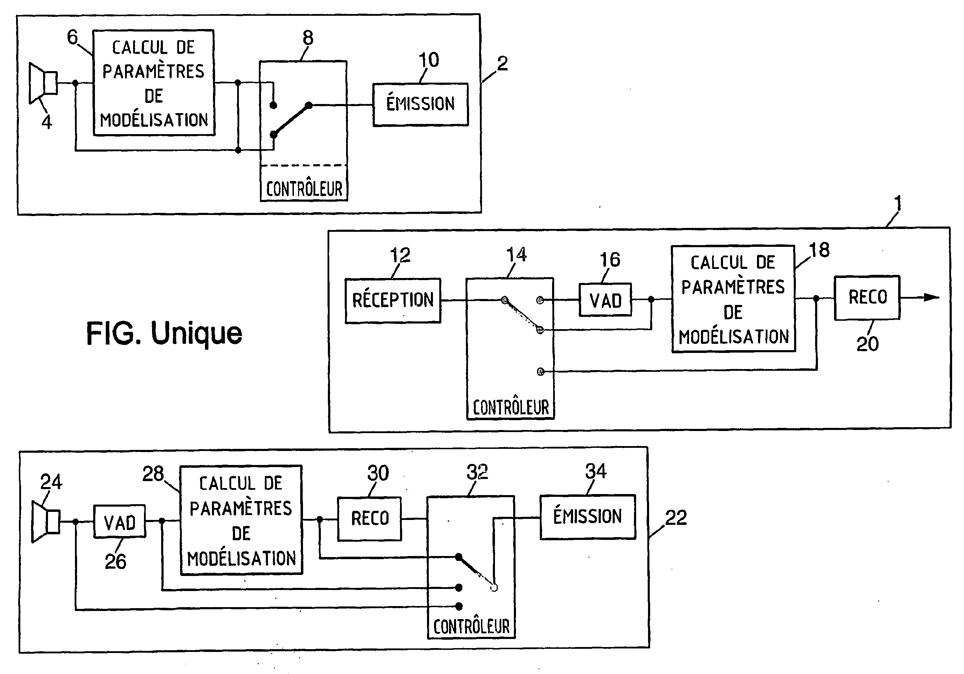

D'autres caractéristiques et avantages de l'invention apparaîtront encore à la lecture de la description qui va suivre. Celle-ci est purement illustrative et doit être lue en regard des dessins annexés sur lesquels :
- la figure unique est un schéma représentant un système dans un mode de réalisation de la présente invention.

Le système représenté sur la figure unique comporte un serveur 1 et un terminal utilisateur 2, qui communiquent entre eux par l'intermédiaire d'un réseau (non représenté) disposant de canaux pour la transmission de signaux de voix et de canaux pour la transmission de signaux de données.

Le terminal 2 comporte un microphone 4, qui recueille la parole à reconnaître d'un utilisateur sous forme d'un signal audio. Le terminal 2 comporte également un module de calcul de paramètres de modélisation 6, qui réalise de façon connue en soi une analyse acoustique permettant d'extraire les paramètres pertinents du signal audio, et éventuellement pouvant avantageusement réaliser une fonction de débruitage. Le terminal 2 comprend un contrôleur 8, qui sélectionne un signal parmi le signal audio et un signal indicatif des paramètres calculés par le module de calcul de paramètres 6. II comprend en outre une interface 10 pour l'émission sur le réseau du signal sélectionné, à destination du serveur,

Le serveur 1 comporte une interface réseau 12 pour recevoir les signaux qui lui sont adressés, un contrôleur 14 qui analyse le signal reçu et le dirige ensuite sélectivement vers un module de traitement parmi plusieurs modules 16,18,20. Le module 16 est un détecteur d'activité vocale, qui assure la détection des segments correspondant à de la parole et devant être reconnus. Le module 18 assure le calcul de paramètres de modélisation de façon semblable au module de calcul 6 du terminal. Toutefois, le modèle de calcul peut être différent. Le module 20 exécute un algorithme de reconnaissance de type connu, par exemple à base de modèles de Markov cachés avec un vocabulaire par exemple supérieur à 100 000 mots. Ce moteur de reconnaissance 20 compare les paramètres en entrée à des modèles de parole qui représentent des mots ou des phrases, et détermine la meilleure forme associée, compte tenu de modèles syntaxiques qui décrivent les enchaînements de mots attendus, de modèles lexicaux qui précisent les différentes prononciations des mots, et de modèles acoustiques représentatifs des sons prononcés. Ces modèles sont par exemple multilocuteurs, capables de reconnaître, avec une bonne fiabilité, de la parole, indépendamment du locuteur.

Le contrôleur 14 commande le module de VAD 16, le module de calcul de paramètres 18 et le moteur de reconnaissance 20 de façon à :
a/ lorsque le signal reçu par l'interface de réception 12 est de type audio et n'indique pas des segments de parole obtenus par détection d'activité vocale, activer le module VAD 16 en lui adressant le signal reçu en tant que signal d'entrée, puis adresser les segments de parole extraits par le module VAD 16 au module de calcul de paramètres 18 en tant que paramètres d'entrée, puis adresser les paramètres calculés par ces moyens de calcul de paramètres 18 au moteur de reconnaissance 20 en tant que paramètres d'entrée ;
b/ lorsque le signal reçu par l'interface de réception 12 est de type audio et indique des segments de parole après détection d'activité vocale, activer le module de calcul de paramètres 18 en lui adressant le signal reçu en tant que signal d'entrée, puis adresser les paramètres calculés par ce module de calcul de paramètres 18 au moteur de reconnaissance 20 en tant que paramètres d'entrée ;
c/ lorsque le signal reçu par l'interface de réception 12 indique des paramètres de modélisation, adresser lesdits paramètres indiqués au moteur de reconnaissance 20 en tant que paramètres d'entrée.

Par exemple, dans le cas où l'utilisateur du terminal 1 utilise une application permettant de demander des informations sur la bourse et énonce : « cours de clôture des trois derniers jours de la valeur Lambda », le signal audio correspondant est capturé par le microphone 4. Dans le mode de réalisation du système selon l'invention, ce signal est ensuite, par défaut, traité par le module de calcul de paramètres 6, puis un signal indiquant les paramètres de modélisation calculés est envoyé vers le serveur 1.

Quand par exemple des problèmes de disponibilité de canaux de données ou du module de calcul 6 surgissent, c'est le signal audio en sortie du microphone 4 que le contrôleur 8 sélectionne alors pour le transmettre à destination du serveur 1.

Le contrôleur peut aussi être adapté pour envoyer systématiquement un signal indiquant les paramètres de modélisation.

Le serveur réceptionne le signal avec l'interface de réception 12, puis réalise, pour effectuer la reconnaissance de parole sur le signal reçu, le traitement indiqué en a/ ou b/ si le signal envoyé par le terminal 1 est de type audio ou le traitement indiqué en c/ si le signal envoyé par le terminal 1 indique des paramètres de modélisation.

Le serveur selon l'invention est également apte à effectuer de la reconnaissance de parole sur un signal transmis par un terminal ne disposant pas de moyens de calcul de paramètres de modélisation, ni de moyens de reconnaissance et disposant éventuellement de moyens de détection d'activité vocale.

Avantageusement, dans un mode de réalisation de l'invention, le système peut comporter en outre un terminal utilisateur 22, qui comporte un microphone 24 similaire à celui du terminal 2, un module 26 de détection d'activité vocale. La fonction du module 26 est semblable à celle du module de détection d'activité vocale 16 du serveur 1, Toutefois le modèle de détection peut être différent. Le terminal 22 comporte un module de calcul de paramètres de modélisation 28, un moteur de reconnaissance 30 et un contrôleur 32. Il comprend une interface 10 pour l'émission sur le réseau, à destination du serveur, du signal sélectionné par le contrôleur 32.

Le moteur de reconnaissance 30 du terminal peut par exemple traiter un vocabulaire de moins de 10 mots. Il peut fonctionner en mode monolocuteur, et nécessiter une phase d'apprentissage préalable à partir de la voix de l'utilisateur.

La reconnaissance de parole peut s'effectuer de différentes façon :
- exclusivement au niveau du terminal, ou
- ou exclusivement au niveau du serveur, ou
- partiellement ou totalement au niveau du terminal et également, de manière alternative ou simultanée, partiellement ou totalement au niveau du serveur.

Quand un choix doit être effectué sur la forme finalement retenue entre une forme associée fournie par le module de reconnaissance du serveur et une forme associée fournie par ceux du terminal, il peut s'effectuer sur la base de différents critères, qui peuvent varier d'un terminal à l'autre, mais aussi d'une application à l'autre ou d'un contexte donné à un autre. Ces critères peuvent donner par exemple priorité à la reconnaissance effectuée au niveau du terminal, ou à la forme associée présentant le plus fort taux de probabilité, ou encore à la forme déterminée le plus rapidement.

La façon dont s'effectue cette reconnaissance peut être figée au niveau du terminal dans un mode donné. Ou elle peut varier en fonction notamment de critères liés à l'application concernée, à des problématiques de charge des différents moyens au niveau du terminal et du serveur, ou encore à des problématiques de disponibilité de canaux de transmission voix ou données. Les contrôleurs 32 et 14 situés respectivement au niveau du terminal et du serveur traduisent la façon dont doit s'effectuer la reconnaissance.

Le contrôleur 32 du terminal est adapté pour sélectionner un signal parmi le signal audio d'origine en sortie du microphone 24, un signal audio représentatif des segments de parole extraits par le module VAD 26 et un signal indiquant des paramètres de modélisation 28. Suivant les cas, le traitement au niveau du terminal se poursuivra ou non au-delà de l'étape de traitement du terminal délivrant le signal à émettre.

Par exemple, considérons un mode de réalisation dans lequel le module VAD 26 du terminal est conçu par exemple pour détecter rapidement des mots de commandes et le module VAD 16 du serveur peut être plus lent, mais est conçu pour détecter des phrases entières. Une application, dans laquelle le terminal 22 effectue une reconnaissance en local et de façon simultanée fait effectuer une reconnaissance par le serveur à partir du signal audio transmis, permet notamment de cumuler les avantages de chaque module de détection vocale.

Considérons à présent une application dans laquelle la reconnaissance est effectuée exclusivement en local (terminal) ou exclusivement distante (serveur centralisé), sur la base de mots-clés permettant la commutation :
La reconnaissance en cours est d'abord locale : l'utilisateur énonce : « appelle Antoine », Antoine figurant dans le répertoire local. Puis il énonce « messagerie », mot-clé qui est reconnu en local et qui fait basculer en reconnaissance par le serveur. La reconnaissance est maintenant distante. II énonce « rechercher le message de Josiane ». Lorsque ledit message a été écouté, il énonce « terminé », mot-clé qui fait à nouveau basculer l'application en reconnaissance locale.

Le signal transmis au serveur pour y effectuer la reconnaissance était de type signal audio. Dans un autre mode de réalisation, il pourrait indiquer les paramètres de modélisation calculés dans le terminal.

Considérons maintenant une application dans laquelle la reconnaissance au niveau du terminal et celle au niveau du serveur sont alternées. La reconnaissance est d'abord effectuée au niveau du terminal 22 et le signal après détection vocale est stocké. Si la réponse est consistante, c'est-à-dire s'il n'y a pas de rejet du module de reconnaissance 30 et si le signal reconnu est valide du point de vue applicatif, l'applicatif local au terminal passe à la phase applicative suivante. Dans le cas contraire, le signal stocké est envoyée au serveur pour effectuer la reconnaissance sur un signal indiquant des segments de parole après détection d'activité vocale sur le signal audio (dans un autre mode de réalisation, ce sont les paramètres de modélisation qui pourraient être stockés)

Ainsi l'utilisateur énonce « appelle Antoine » ; l'ensemble du traitement au niveau du terminal 22 s'effectue avec stockage du signal. Le signal est reconnu avec succès en local. II énonce alors « rechercher le message de Josiane » ; la reconnaissance au niveau du terminal échoue ; le signal stocké est alors transmis au serveur. Le signal est bien reconnu et le message demandé est joué.

Dans une autre application, la reconnaissance se fait simultanément au niveau du terminal et également, et ce indépendamment du résultat de la reconnaissance locale, au niveau du serveur. L'utilisateur énonce « appelle Antoine ». La reconnaissance se déroule aux deux niveaux. Comme le traitement local interprète la commande, le résultat distant n'est pas considéré. Puis l'utilisateur énonce « rechercher le message de Josiane » qui génère un échec en local, et qui est bien reconnu au niveau du serveur.

Dans un mode de réalisation, le moteur de reconnaissance 30 du terminal 22 est un programme exécutable téléchargé depuis le serveur par des moyens classiques de transfert de données.

Avantageusement, pour une application donnée du terminal 22, des modèles de reconnaissance du terminal peuvent être téléchargés ou mis à jour au cours d'une session applicative connectée au réseau.

D'autres ressources logicielles utiles à la reconnaissance de parole peuvent aussi être téléchargées depuis le serveur 1, comme le module 6,28 de calcul de paramètres de modélisation ou le détecteur d'activité vocale 26.

D'autres exemples pourraient être décrits, mettant en oeuvre par exemple des applications liées aux voitures, à l'électroménager, multimédia.

Comme présenté dans les exemples de réalisation ci-dessus décrits, un système selon l'invention permet d'utiliser de façon optimisée les différentes ressources nécessaires au traitement de la reconnaissance de la parole et présentes au niveau du terminal et du serveur.

## Revendications

1. Système de reconnaissance de parole distribuée, comportant au moins un terminal utilisateur et au moins un serveur aptes à communiquer entre eux par l'intermédiaire d'un réseau de télécommunications, dans lequel le terminal utilisateur comprend :
- des moyens d'obtention d'un signal audio à reconnaître ;
- des premiers moyens de calcul de paramètres de modélisation du signal audio ; et
- des premiers moyens de contrôle pour sélectionner au moins un signal à émettre à destination du serveur parmi le signal audio à reconnaître et un signal indiquant les paramètres de modélisation calculés, en fonction du contexte applicatif du terminal,
et dans lequel le serveur comprend:
- des moyens de réception du signal sélectionné en provenance du terminal utilisateur;
- des seconds moyens de calcul de paramètres de modélisation d'un signal d'entrée;
- des moyens de reconnaissance pour associer au moins une forme mémorisée à des paramètres d'entrée; et
- des seconds moyens de contrôle pour commander les seconds moyens de calcul et les moyens de reconnaissance de façon à
• lorsque le signal sélectionné reçu par les moyens de réception est de type audio, activer les seconds moyens de calcul de paramètres en leur adressant le signal sélectionné en tant que signal d'entrée, et adresser les paramètres calculés par les seconds moyens de calcul aux moyens de reconnaissance en tant que paramètres d'entrée, et
• lorsque le signal sélectionné reçu par les moyens de réception indique des paramètres de modélisation, adresser lesdits paramètres Indiqués aux moyens de reconnaissance en tant que paramètres d'entrée.

2. Système selon la revendication 1, dans lequel les premiers moyens de contrôle sélectionnent un signal à émettre en fonction en outre de l'état du réseau et/ou suite à une coordination entre les moyens de contrôle respectifs du terminal et du serveur.

3. Système selon la revendication 1, dans lequel les moyens d'obtention du signal audio à reconnaître comprennent des moyens de détection d'activité vocale pour produire le signal à reconnaître sous forme d'extraits d'un signal audio d'origine, en-dehors de périodes d'inactivité vocale.

4. Système selon la revendication 3, dans lequel les premiers moyens de contrôle sont adaptés pour sélectionner le signal à émettre à destination du serveur parmi au moins le signal audio d'origine, le signal audio à reconnaître sous forme des segments extraits par les moyens de détection d'activité vocale et le signal indiquant des paramètres de modélisation calculés par les premiers moyens de calcul de paramètres.

5. Système selon l'une quelconque des revendications précédentes, dans lequel:
- le serveur comporte en outre des moyens de détection d'activité vocale pour extraire d'un signal de type audio en-dehors de périodes d'inactivité vocale des segments de parole ; et
- les seconds moyens de contrôle sont adaptés pour commander les seconds moyens de calcul et les moyens de reconnaissance lorsque le signal sélectionné reçu par les moyens de réception est de type audio de façon à
si le signal de type audio est représentatif de segments de parole après détection d'activité vocale, activer les seconds moyens de calcul de paramètres en leur adressant le signal sélectionné en tant que signal d'entrée, puis adresser les paramètres calculés par les seconds moyens de calcul de paramètres aux moyens de reconnaissance en tant que paramètres d'entrée;
sinon activer les moyens de détection d'activité vocale du serveur en leur adressant le signal reçu en tant que signal d'entrée, puis adresser les segments extraits par les seconds moyens de détection d'activité vocale aux seconds moyens de calcul de paramètres en tant que signal d'entrée, puis adresser les paramètres calculés par les seconds moyens de calcul de paramètres aux moyens de reconnaissance en tant que paramètres d'entrée.

6. Système selon l'une quelconque des revendications précédentes, dans lequel le terminal utilisateur comporte en outre des moyens de stockage adaptés pour stocker le signal audio à reconnaître ou les paramètres de modélisation calculés par les premiers moyens de calcul de paramètres.

7. Terminal utilisateur pour mettre en oeuvre un système de reconnaissance de parole distribuée selon l'une des revendications 1 à 6, comportant:
- des moyens d'obtention d'un signal audio à reconnaître;
- des moyens de calcul de paramètres de modélisation du signal audio; et
- des premiers moyens de contrôle pour sélectionner au moins un signal à émettre à destination d'un serveur parmi le signal audio à reconnaître et un signal indiquant des paramètres de modélisation calculés, en fonction du contexte applicatif du terminal.

8. Terminal utilisateur selon la revendication 7, dans lequel les premiers moyens de contrôle sélectionnent un signal à émettre en fonction en outre de l'état du réseau et/ou suite à une coordination entre les moyens de contrôle respectifs du terminal et du serveur.

9. Terminal utilisateur selon la revendication 7 ou 8, dans lequel au moins une partie des moyens de calcul de paramètres est téléchargée depuis le serveur.

10. Terminal utilisateur selon la revendication 7 ou 8, dans lequel au moins une partie des moyens de reconnaissance est téléchargée depuis le serveur.

11. Serveur pour mettre en oeuvre un système de reconnaissance de parole distribuée selon l'une des revendications 1 à 6 comprenant:
- des moyens de réception, en provenance d'un terminal utilisateur, d'un signal sélectionné audit terminal;
- des moyens de calcul de paramètres de modélisation d'un signal d'entrée;
- des moyens de reconnaissance pour associer au moins une forme mémorisée à des paramètres d'entrée; et
- des moyens de contrôle pour commander les seconds moyens de calcul et les moyens de reconnaissance de façon à
• lorsque le signal sélectionné reçu par les moyens de réception est de type audio, activer les moyens de calcul de paramètres en leur adressant le signal sélectionné en tant que signal d'entrée, et adresser les paramètres calculés par les moyens de calcul aux moyens de reconnaissance en tant que paramètres d'entrée, et
• lorsque le signal sélectionné reçu par les moyens de réception indique des paramètres de modélisation, adresser lesdits paramètres indiqués aux moyens de reconnaissance en tant que paramètres d'entrée.

12. Serveur selon la revendication 11 comprenant des moyens pour télécharger par l'intermédiaire du réseau de télécommunications à destination d'un terminal au moins une partie des premiers moyens de calcul de paramètres ou des moyens de reconnaissance du terminal.

13. Serveur selon la revendication 12 comprenant des moyens pour télécharger des ressources logicielles de reconnaissance vocale par l'intermédiaire du réseau de télécommunications à destination d'un terminal.

14. Serveur selon la revendication 13, dans lequel lesdites ressources comprennent au moins un module parmi : un module de VAD, un module de calcul de paramètres de modélisation d'un signal audio et un module de reconnaissance pour associer au moins une forme mémorisée à des paramètres de modélisation.

## Claims

1. Distributed speech recognition system comprising at least one user terminal and at least one server suitable for communication with one another via a telecommunications network, in which the user terminal comprises:
- means for obtaining an audio signal to be recognized;
- first audio signal modelling parameter calculation means; and
- first control means for selecting at least one signal to be transmitted to the server, from the audio signal to be recognized and a signal indicating the calculated modelling parameters, as a function of the application context of the terminal,
and in which the server comprises:
- means for receiving the selected signal originating from the user terminal;
- second input signal modelling parameter calculation means;
- recognition means for associating at least one stored form with input parameters; and
- second control means for controlling the second calculation means and the recognition means in order,
• if the selected signal received by the reception means is an audio signal, to activate the second parameter calculation means by addressing the selected signal to them as an input signal, and to address the parameters calculated by the second calculation means to the recognition means as input parameters, and
• if the selected signal received by the reception means indicates modelling parameters, to address said indicated parameters to the recognition means as input parameters.

2. System according to Claim 1, in which the first control means select a signal to be transmitted as a function moreover of the state of the network and/or pursuant to coordination between the respective control means of the terminal and of the server.

3. System according to Claim 1, in which the means for obtaining the audio signal to be recognized comprise voice activity detection means to produce the signal to be recognized in the form of extracts of an original audio signal, outside voice inactivity periods.

4. System according to Claim 2, in which the first control means are adapted to select the signal to be transmitted to the server from at least the original audio signal, the audio signal to be recognized in the form of segments extracted by the voice activity detection means and the signal indicating modelling parameters calculated by the first parameter calculation means.

5. System according to any one of the preceding claims, in which:
- the server furthermore comprises voice activity detection means for extracting speech segments from an audio signal outside of voice inactivity periods; and
- the second control means are adapted to control the second calculation means and the recognition means if the selected signal received by the reception means is an audio signal, in order,
if the audio signal represents speech segments following voice activity detection, to activate the second parameter calculation means by addressing the selected signal to them as an input signal, then to address the parameters calculated by the second parameter calculation means to the recognition means as input parameters;
if not, to activate the voice activity detection means of the server by addressing the received signal to them as an input signal, then to address the segments extracted by the second voice activity detection means to the second parameter calculation means as input signal, then to address the parameters calculated by the second parameter calculation means to the recognition means as input parameters.

6. System according to any one of the preceding claims, in which the user terminal furthermore comprises storage means adapted to store the audio signal to be recognized or the modelling parameters calculated by the first parameter calculation means.

7. User terminal to implement a distributed speech recognition system according to one of Claims 1 to 6, comprising:
- means for obtaining an audio signal to be recognized;
- audio signal modelling parameter calculation means; and
- first control means for selecting at least one signal to be transmitted to a server, from the audio signal to be recognized and a signal indicating calculated modelling parameters as a function of the application context of the terminal.

8. User terminal according to Claim 7, in which the first control means select a signal to be transmitted as a function moreover of the state of the network and/or pursuant to a coordination between the respective control means of the terminal and of the server.

9. User terminal according to Claim 7 or 8, in which at least part of the parameter calculation means is downloaded from the server.

10. User terminal according to Claim 7 or 8, in which at least part of the recognition means is downloaded from the server.

11. Server to implement a distributed speech recognition system according to one of Claims 1 to 6, comprising:
- means for receiving, from a user terminal, a signal selected at said terminal;
- input signal modelling parameter calculation means;
- recognition means for associating at least one stored form with input parameters; and
- control means for controlling the second calculation means and the recognition means, in order,
• if the selected signal received by the reception means is an audio signal, to activate the parameter calculation means by addressing the selected signal to them as an input signal, and to address the parameters calculated by the calculation means to the recognition means as input parameters, and
• if the selected signal received by the reception means indicates modelling parameters, to address said indicated parameters to the recognition means as input parameters.

12. Server according to Claim 11, comprising means for downloading via the telecommunications network to a terminal at least part of the first parameter calculation means or recognition means of the terminal.

13. Server according to Claim 12, comprising means for downloading voice recognition software resources via the telecommunications network to a terminal.

14. Server according to Claim 13, in which said resources comprise at least one module from: a VAD module, an audio signal modelling parameter calculation module and a recognition module for associating at least one stored form with modelling parameters.

## Patentansprüche

1. System zur verteilten Spracherkennung, das mindestens ein Benutzerendgerät und mindestens einen Server aufweist, die fähig sind, über ein Fernmeldenetz miteinander zu kommunizieren, bei dem das Benutzerendgerät aufweist:
- Einrichtungen für den Erhalt eines zu erkennenden Audiosignals;
- erste Einrichtungen zur Berechnung von Modellisierungsparametern des Audiosignals; und
- erste Steuereinrichtungen, um mindestens ein an den Server zu sendendes Signal aus dem zu erkennenden Audiosignal und einem Signal auszuwählen, das die berechneten Modellisierungsparameter anzeigt, in Abhängigkeit vom Anwendungskontext des Endgeräts,
und bei dem der Server aufweist:
- Einrichtungen für den Empfang des vom Benutzerendgerät kommenden ausgewählten Signals;
- zweite Einrichtungen zur Berechnung von Modellisierungsparametern eines Eingangssignals;
- Erkennungseinrichtungen, um mindestens eine gespeicherte Form Eingangsparametern zuzuordnen; und
- zweite Steuereinrichtungen, um die zweiten Recheneinrichtungen und die Erkennungseinrichtungen zu steuern, um
• wenn das von den Empfangseinrichtungen empfangene ausgewählte Signal vom Audio-Typ ist, die zweiten Einrichtungen zur Berechnung von Parametern zu aktivieren, indem ihnen das ausgewählte Signal als Eingangssignal übermittelt wird, und die von den zweiten Recheneinrichtungen berechneten Parameter als Eingangsparameter an die Erkennungseinrichtungen zu übermitteln, und
• wenn das von den Empfangseinrichtungen empfangene ausgewählte Signal Modellisierungsparameter anzeigt, die angezeigten Parameter als Eingangsparameter an die Erkennungseinrichtungen zu übermitteln.

2. System nach Anspruch 1, bei dem die ersten Steuereinrichtungen ein zu sendendes Signal außerdem in Abhängigkeit vom Zustand des Netzes und/oder nach einer Koordination zwischen den Steuereinrichtungen des Endgeräts bzw. des Servers auswählen.

3. System nach Anspruch 1, bei dem die Einrichtungen zum Erhalt des zu erkennenden Audiosignals Einrichtungen zur Erfassung von Sprachaktivität enthalten, um das zu erkennende Signal in Form von Auszügen eines Ursprungsaudiosignals außerhalb Perioden sprachlicher Inaktivität zu erzeugen.

4. System nach Anspruch 3, bei dem die ersten Steuereinrichtungen geeignet sind, um das an den Server zu sendende Signal aus mindestens dem Ursprungsaudiosignal, dem zu erkennenden Audiosignal in Form der durch die Einrichtungen zur Erfassung von Sprachaktivität extrahierten Segmente und dem Signal auszuwählen, das von den ersten Parameter-Berechnungseinrichtungen berechnete Modellisierungsparameter anzeigt.

5. System nach einem der vorhergehenden Ansprüche, bei dem:
- der Server außerdem Einrichtungen zur Erfassung von Sprachaktivität aufweist, um ein Signal vom Audio-Typ außerhalb von Perioden sprachlicher Inaktivtät der Sprachsegmente zu extrahieren; und
- die zweiten Steuereinrichtungen geeignet sind, um die zweiten Recheneinrichtungen und die Erkennungseinrichtungen zu steuern, wenn das von den Erkennungseinrichtungen empfangene ausgewählte Signal vom Audio-Typ ist, um
wenn das Signal vom Audio-Typ für Sprachsegmente nach Erfassung einer Sprachaktivität repräsentativ ist, die zweiten Parameter-Berechnungseinrichtungen zu aktivieren, indem ihnen das ausgewählte Signals als Eingangssignal übermittelt wird, dann die von den zweiten Parameter-Berechungseinrichtungen berechneten Parameter als Eingangsparameter an die Erkennungseinrichtungen zu übermitteln;
sonst die Einrichtungen zur Erfassung von Sprachaktivität des Servers zu aktivieren, indem ihnen das empfangene Signal als Eingangssignal übermittelt wird, dann die von den zweiten Einrichtungen zur Erfassung von Sprachaktivität extrahierten Segmente als Eingangssignal an die zweiten Parameter-Berechnungseinrichtungen zu übermitteln, dann die von den zweiten Parameter-Berechnungseinrichtungen berechneten Parameter als Eingangsparameter an die Erkennungseinrichtungen zu übermitteln.

6. System nach einem der vorhergehenden Ansprüche, bei dem das Benutzerendgerät außerdem Speichereinrichtungen aufweist, die geeignet sind, um das zu erkennende Audiosignal oder die von den ersten Parameter-Berechnungseinrichtungen berechneten Modellisierungsparameter zu speichern.

7. Benutzerendgerät zur Anwendung eines Systems zur verteilten Spracherkennung nach einem der Ansprüche 1 bis 6, das aufweist:
- Einrichtungen zum Erhalt eines zu erkennenden Audiosignals;
- Einrichtungen zur Berechnung von Modellisierungsparametern des Audiosignals; und
- erste Steuereinrichtungen, um mindestens ein an einen Server zu sendendes Signal aus dem zu erkennenden Audiosignal und einem Signal auszuwählen, das berechnete Modellisierungsparameter anzeigt, in Abhängigkeit vom Anwendungskontext des Endgeräts.

8. Benutzerendgerät nach Anspruch 7, bei dem die ersten Steuereinrichtungen ein zu sendendes Signal außerdem in Abhängigkeit vom Zustand des Netzes und/oder nach einer Koordination zwischen den Steuereinrichtungen des Endgeräts bzw. des Servers auswählen.

9. Benutzerendgerät nach Anspruch 7 oder 8, bei dem mindestens ein Teil der Parameter-Berechnungseinrichtungen vom Server aus heruntergeladen wird.

10. Benutzerendgerät nach Anspruch 7 oder 8, bei dem mindestens ein Teil der Erkennungseinrichtungen vom Server aus heruntergeladen wird.

11. Server zur Anwendung eines Systems zur verteilten Spracherkennung nach einem der Ansprüche 1 bis 6, der aufweist:
- Einrichtungen zum Empfang, von einem Benutzerendgerät, eines im Endgerät ausgewählten Signals;
- Einrichtungen zum Berechnen von Modellisierungsparametern eines Eingangssignals;
- Erkennungseinrichtungen, um mindestens eine gespeicherte Form Eingangsparametern zuzuordnen; und
- Steuereinrichtungen, um die zweiten Recheneinrichtungen und die Erkennungseinrichtungen zu steuern, um:
• wenn das von den Empfangseinrichtungen empfangene ausgewählte Signal vom Audio-Typ ist, die Parameter-Berechnungseinrichtungen zu aktivieren, indem ihnen das ausgewählte Signal als Eingangssignal übermittelt wird, und die von den Recheneinrichtungen berechneten Parameter als Eingangsparameter an die Erkennungseinrichtungen zu übermitteln, und
• wenn das von den Empfangseinrichtungen empfangene ausgewählte Signal Modellisierungsparameter anzeigt, die angezeigten Parameter als Eingangsparameter an die Erkennungseinrichtungen zu übermitteln.

12. Server nach Anspruch 11, der Einrichtungen zum Herunterladen mindestens eines Teils der ersten Parameter-Berechnungseinrichtungen oder der Erkennungseinrichtungen eines Endgeräts über das Fernmeldenetz an das Endgerät, aufweist.

13. Server nach Anspruch 12, der Einrichtungen zum Herunterladen von Spracherkennungs-Softwareressourcen über das Fernmeldenetz an ein Endgerät aufweist.

14. Server nach Anspruch 13, bei dem die Ressourcen mindestens eines der folgenden Module aufweisen: ein VAD-Modul, ein Modul zur Berechnung von Modellisierungsparametern eines Audiosignals und ein Erkennungsmodul, um Modellisierungsparametern mindestens eine gespeicherte Form zuzuordnen.
